# EUROPÄISCHE PATENTSCHRIFT

(11) **EP 0 401 404 B1**
(45) Veröffentlichungstag und Bekanntmachung des Hinweises auf die Patenterteilung: **27.01.1993**
(21) Anmeldenummer: 89110289.9
(22) Anmeldetag: 07.06.1989
(51) Int. Cl.: B60D 1/46

(54) **Höhenverstellbare Anhängerkupplung**
Vertically adjustable mounting for a trailer hitch
Dispositif d'attelage réglable en hauteur

(43) Veröffentlichungstag der Anmeldung: 12.12.1990
(73) Patentinhaber: ROCKINGER Spezialfabrik für Anhängerkupplungen GmbH & Co., D-80904 München (DE)
(72) Erfinder: Baumgartner, Richard, D-8254 Isen (DE)
(74) Vertreter: Hoffmann, Eckart, Dipl.-Ing.

(56) Entgegenhaltungen:
- EP-A- 0 155 338
- EP-A- 0 215 443
- EP-A- 0 279 082
- DE-A- 2 910 164

## Beschreibung

Die Erfindung betrifft eine höhenverstellbare Anhängerkupplung nach dem Oberbegriff des Patentanspruchs 1.

Anhängerkupplungen dieser Art sind beispielsweise aus der DE-C-29 10 164 und der EP-B-0155338 bekannt. Bei diesen bekannten höhenverstellbaren Anhängerkupplungen ist auf möglichst bequeme Höhenverstellbarkeit durch eine Ein-Hand-Bedienung Wert gelegt. Zu diesem Zweck werden beide Riegel mittels eines einzigen Handgriffs zwischen ihrer Verriegelungsstellung und ihrer Entriegelungsstellung verstellt.

Unter dem Blickwinkel der Handhabung stellt diese Ein-Hand-Bedienung zweifellos eine besonders günstige Lösung dar. Sie ist naturgemäß an einen vergleichsweise komplizierten Aufbau und entsprechend hohe Herstellungskosten gebunden. Es hat sich nun erwiesen, daß die Kosten für derart bequem bedienbare höhenverstellbare Anhängerkupplungen der gewünschten weiten Verbreitung im Wege stehen, so daß in vielen Fällen nach wie vor auf früher übliche höhenverstellbare Anhängerkupplungen zurückgegriffen wird, deren Ablösung wegen der bei ihnen bestehenden hohen Unfallgefahr angestrebt wurde.

Aufgabe der vorliegenden Erfindung ist es deshalb, eine höhenverstellbare Anhängerkupplung zu schaffen, die zwar etwas weniger bequem als die eingangs erwähnten bedienbar ist, dafür aber mit deutlich geringeren Kosten hergestellt werden kann und gleichwohl die Unfallgefahr früherer höhenverstellbarer Anhängerkupplungen beseitigt.

Diese Aufgabe wird erfindungsgemäß durch eine höhenverstellbare Anhängerkupplung mit den Merkmalen des Patentanspruchs 1 gelöst.

Vorteilhafte Weiterbildungen der Erfindung sind in den Unteransprüchen gekennzeichnet.

Die Erfindung macht von demselben grundsätzlichen Konzept Gebrauch, das auch bei den eingangs erwähnten bekannten Anhängerkupplungen verwendet wird, wonach ein Kupplungsmaulträger, an dem die eigentliche Kupplung befestigt wird, in vertikalen, am Fahrzeug befestigten Führungsschienen geführt wird, und in verschiedenen Höhenlagen arretiert werden kann. Dazu dienen Riegel, die in horizontalen Bohrungen im Kupplungsmaulträger angeordnet und teilweise aus dem Kupplungsmaulträger heraus in eine Verriegelungsstellung bzw. in eine in ihn zurückgezogene Entriegelungsstellung verstellbar sind. Die Führungsschienen sind vorzugsweise so beschaffen, daß sie die eigentliche Zugkraft aufnehmen, während die Riegel die Stützlast aufnehmen. Die höhenverstellbare Anhängerkupplung gemäß der Erfindung erfordert eine Zwei-Hand-Bedienung, d. h. mit einer Hand muß der Kupplungsmaulträger an einem Griff gehalten werden, während mit der anderen Hand die beiden Riegel nacheinander aus der Verriegelungsstellung in die Entriegelungsstellung gebracht werden müssen, damit die Anhängerkupplung höhenverstellt werden kann. Sobald beide Riegel aus den Ausnehmungen der Führungsschienen herausgezogen sind und der Kupplungsmaulträger um ein kleines Stück in der Höhe verstellt wurde, können die Riegel mittels ihrer Handhabung aus der Arretierung gelöst werden. Sie werden dann elastisch gegen die Führungsschienen vorgespannt und greifen bei weiterer Höhenverstellung des Kupplungsmaulträgers automatisch in die Ausnehmungen der Führungsschienen ein, sobald sie mit den nächsten Ausnehmungen ausgerichtet sind.

Ausführungsbeispiele der Erfindung werden nachfolgend anhand der Zeichnungen näher erläutert. Es zeigen:
Fig. 1 eine Draufsicht von oben auf den Kupplungs maulträger,
Fig. 2 eine Vorderansicht des Kupplungsmaulträgers,
Fig. 3 eine Seitenschnittansicht des Kupplungsmaulträgers und
Fig. 4 eine Draufsicht entsprechend Fig. 1 einer anderen Ausführungsform der Erfindung.

In den Zeichnungen ist der Kupplungsmaulträger ohne die am Fahrzeug zu befestigenden Führungsschienen dargestellt. Der Kupplungsmaulträger ist so beschaffen, daß er mit dem in der EP-B 0155338 beschriebenen austauschbar ist, so daß bezüglich der Gestaltung und Anordnung der Führungsschienen etc. auf diese Druckschrift verwiesen werden kann.

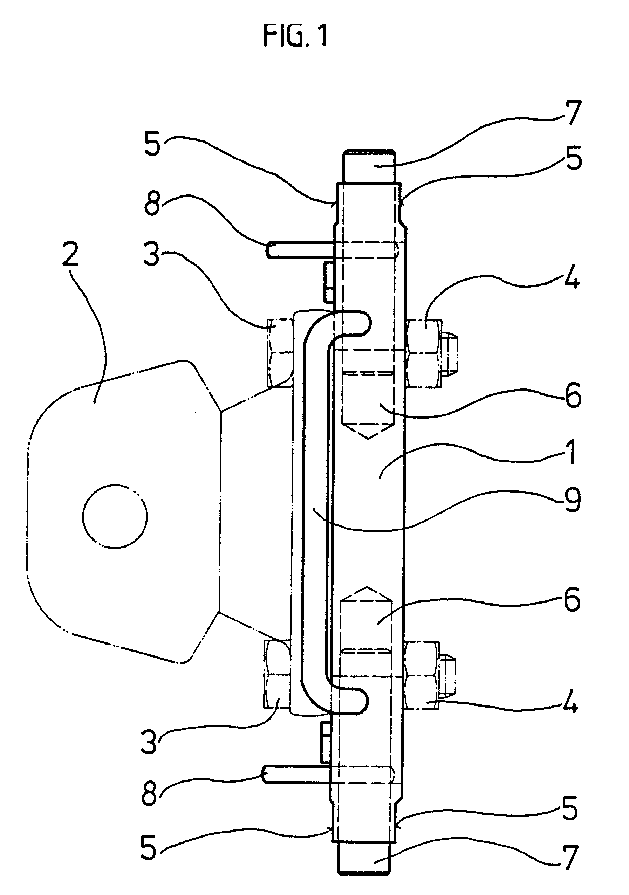

Fig. 1 zeigt den Kupplungsmaulträger 1 in Form einer Platte, an der das strichpunktiert angedeutete Kupplungsmaul 2 mit Hilfe von Schrauben und Muttern 3 und 4 befestigt wird. Der Kupplungsmaulträger 1 ist an beiden Seiten mit Führungsflächen 5 versehen, die mit entsprechenden Führungsflächen der erwähnten Führungsschienen in Eingriff kommen. In zwei horizontalen, vorzugsweise fluchtenden Sackbohrungen 6 ist je ein Riegel 7 verschiebbar geführt. Die Riegel sind auf später noch näher erläuterte Weise mit Hilfe von Hebeln 8 als Handhaben aus ihrer in Fig. 1 gezeigten Verriegelungsstellung, in der sie über die seitlichen Stirnseiten des Kupplungsmaulträgers 1 herausragen, in eine Entriegelungsstellung verstellbar, in der sie in den Kupplungsmaulträger zurückgezogen sind.

Oben an dem Kupplungsmaulträger 1 ist ein Handgriff 9 in Form eines Bügels angebracht, an dem der Kupplungsmaulträger bei der Höhenverstellung bequem gehalten werden kann.

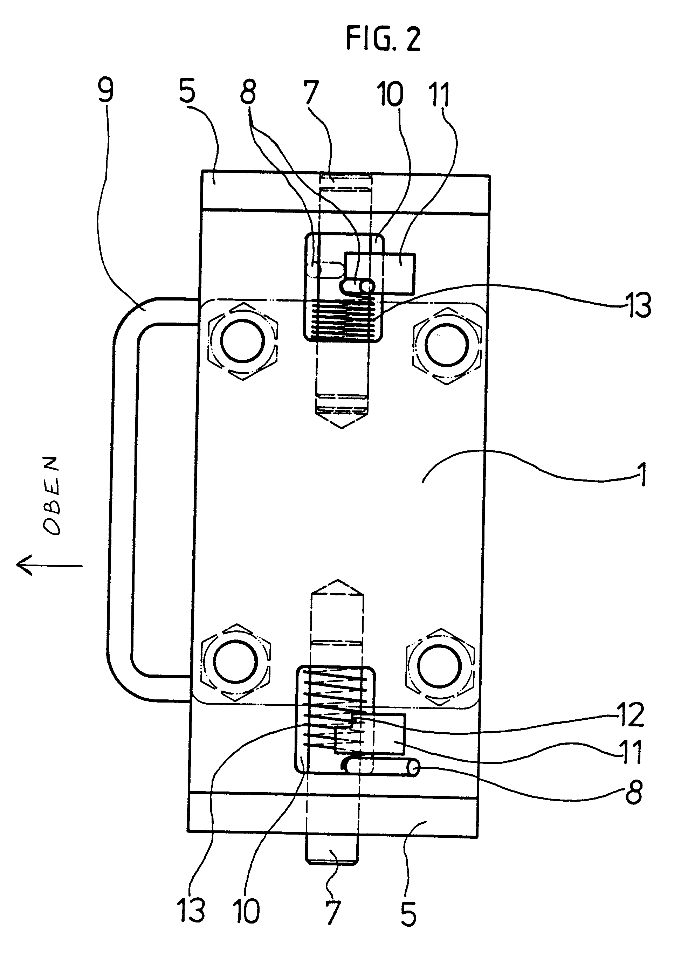

Fig. 2 zeigt die Vorderansicht des Kupplungsmaulträgers. Der Riegel 7 auf der linken Seite ist in der Verriegelungsstellung dargestellt, während der Riegel 7 auf der rechten Seite strichpunktiert in einer Bereitschaftsstellung und ausgezogen in der Entriegelungsstellung wiedergegeben ist. Die Bereitschaftsstellung ist diejenige, wo die Stirnseite des Riegels nahezu mit der seitlichen Stirnseite des Kupplungsmaulträgers fluchtet.

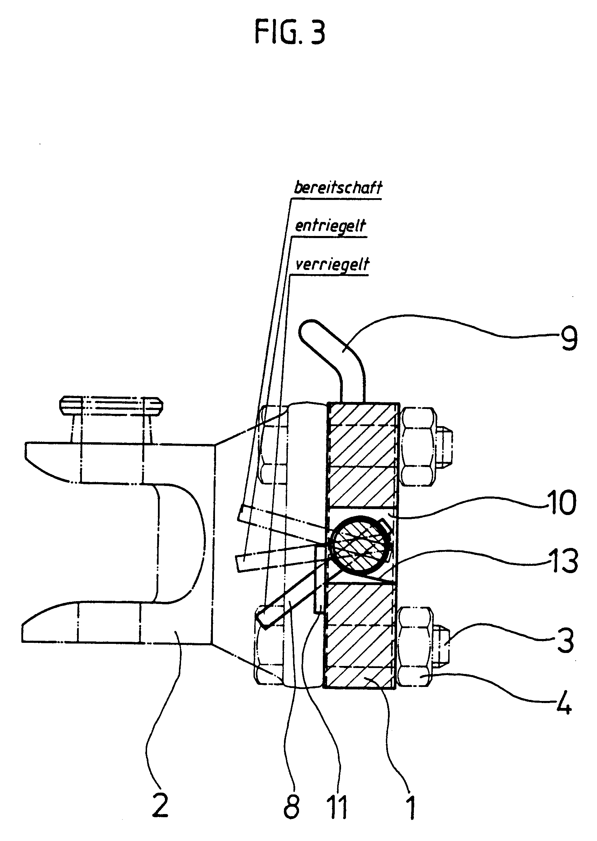

Fig. 3 zeigt die Anordnung in der Seitenschnittdarstellung mit den drei möglichen Stellungen des Hebels 8, nämlich der Verriegelungsstellung entsprechend links in Fig. 2, der Entriegelungsstellung entsprechend der ausgezogen Stellung rechts in Fig. 2 und der Bereitschaftsstellung entsprechend der strichpunktierten Darstellung rechts in Fig. 2.

Wie aus den Figuren 2 und 3 erkennbar, ist der Kupplungsmaulträger im Bereich beider Riegel 7 je mit einem Durchbruch 10 versehen, innerhalb dessen der Riegel 7 freiliegt. Dieser Durchbruch befindet sich etwa im mittleren Teil der den Riegel aufnehmenden Bohrung, so daß auf beiden Seiten genug Material zur Führung und Abstützung des jeweiligen Riegels 7 vorhanden ist. Der Hebel 8 ist, wie aus Fig. 3 entnehmbar, in eine radiale Bohrung des Riegels 7 eingesteckt und auf geeignete Weise verankert, z. B. verstemmt oder eingeschraubt. Bei der in den Figuren 1 bis 3 dargestellten Ausführungsform der Erfindung ist je eine Rastplatte 11 so an dem Kupplungsmaulträger befestigt, daß sie in den Durchbruch 10 hineinragt. Wie links in Fig. 2 gut erkennbar, ist die Rastplatte 11 auf ihrer der Mitte des Kupplungsträgers zugewandten Seite mit einer eine Stufe bildenden Ausnehmung 12 versehen.

Die Rastplatte 11 befindet sich in Axialrichtung der Riegel gesehen, in einem Abstand vom äußeren Rand des Durchbruchs 10, der etwas größer als der Durchmesser des Hebels 8 ist, so daß dieser in der Verriegelungslage des Riegels 7 zwischen den äußeren Rand des Durchbruchs 10 und die nach außen gewandte Seite der Rastplatte 11 nach unten (siehe auch Fig. 3) geschwenkt werden kann. In dieser Verriegelungsstellung ist der Riegel 7 durch Formschluß über seinen Hebel 8 und die Rastplatte 11 gesichert. Eine Drehdruckfeder 13 stützt sich einerseits an der innenliegenden Wand des Durchbruchs 10 und andererseits an dem Hebel 8 ab. Die Drehdruckfeder 13 spannt einerseits den Riegel 8 in die Verriegelungsstellung vor und übt außerdem ein Drehmoment auf den Riegel 7 aus, das ihn in eine solche Richtung zu verschwenken trachtet, daß der Hebel 8 die unterste in Fig. 3 gezeigten Stellungen annimmt. Dieses Drehmoment hält den Hebel 8 sicher in der in Fig. 2 links dargestellten Verriegelungsstellung zwischen dem Rand des Durchbruchs 10 und der zugewandten Seite der Rastplatte 11.

Im normalen Gebrauchszustand der höhenverstellbaren Anhängerkupplung befinden sich beide Riegel 7 in ihrer Verriegelungsstellung und halten damit die Anhängerkupplung in einer bestimmten Höhenlage in den Führungsschienen. Soll diese Höhenlage verändert werden, dann muß der Kupplungsmaulträger am Handgriff 9 ergriffen werden. Um die Reibung zwischen den Führungsschienen und den Riegeln 7 zu verringern und dadurch das Verschieben der Riegel 7 in die Entriegelungsstellung zu erleichtern, sollte der Kupplungsmaulträger 1 mit Hilfe des Handgriffs 9 etwas angehoben werden. Es wird dann zunächst auf einer Seite der Hebel 8 mit der anderen Hand ergriffen, gegen die Kraft der Drehdruckfeder 13 nach oben geschwenkt und dadurch aus der formschlüssigen Sicherung zwischen dem Rand des Durchbruchs 10 und der Rastplatte 11 gelöst, wiederum gegen die Kraft der Feder 13 nach innen, also in Richtung der Mitte des Kupplungsmaulträgers, gedrückt und dann in die Ausnehmung 12 der Rastplatte 11 hinein nach unten in die Verriegelungsstellung gedrückt. Der Hebel 8 liegt nun an der durch die Ausnehmung 12 gebildeten Stufe der Rastplatte 11 an und wird wiederum durch Formschluß in der Verriegelungsstellung gehalten, wobei das von der Feder ausgeübte Drehmoment ein unbeabsichtiges Herausspringen aus dieser Entriegelungsstellung verhindert.

Nachdem auf diese Weise der eine Riegel 7 in die Entriegelungsstellung überführt und dort arretiert wurde, wird mit dem zweiten Riegel auf gleiche Weise verfahren. Dabei braucht der zweite Riegel nicht notwendigerweise in der Entriegelungsstellung arretiert zu werden. Vielmehr kann, nachdem der Eingriff auch dieses zweiten Riegels mit der entsprechenden Ausnehmung der Führungsschiene gelöst wurde, noch während sich Riegel 7 und Hebel 8 in einer Zwischenstellung, d. h. einer Bereitstellung befinden, der Kupplungsmaulträger angehoben oder abgesenkt werden, und der Hebel 8 sogleich wieder losgelassen werden. Der nicht arretierte Riegel 7 wird dann von der Feder 13 gegen die Stirnseite der entsprechenden Führungsschiene gedrückt und rastet automatisch bei weitergehendem Anheben oder Absenken des Kupplungsmaulträgers in die nächst folgende Ausnehmung der Führungsschiene ein. Dabei sorgt die Drehdruckfeder 13 nicht nur dafür, daß der Riegel 7 automatisch in die Ausnehmung einrastet, sondern auch dafür, daß er in seiner Verriegelungsstellung so verschwenkt wird, daß der Hebel 8 wieder in die formschlüssige Sicherungsstellung zwischen dem Rand des Durchbruchs 10 und Rastplatte 11 gelangt.

In dem gerade beschriebenen Fall, wo eine Verstellung nur um eine Stufe vorgenommen werden soll, kann, unmittelbar nachdem der Hebel 8 des an zweiter Stelle gelösten Riegels 7 bereits in der Bereitschaftsstellung losgelassen wurde, der Hebel 8 des anderen Riegels aus seiner Entriegelungsstellung in der Ausnehmung 12 der Rastplatte 11 gelöst und ebenfalls in die Bereitschaftsstellung überführt werden, so daß bei Erreichen der nächsten Höhenlage automatisch beide Riegel einrasten. Soll die Verstellung dagegen über mehrere Stufen erfolgen, dann werden vorübergehend beide Riegel 7 in der Entriegelungsstellung arretiert.

Bei der dargestellten und beschriebenen Ausführungsform durchsetzt der Durchbruch 10 den Kupplungsmaulträger 1 ganz, wie insbesondere aus Fig. 3 erkennbar. Ein solcher Durchbruch ist besonders einfach herzustellen. Eine Öffnung zur Rückseite (rechts in Fig. 3) ist indes nicht unbedingt erforderlich, so daß an Stelle des Durchbruchs auch eine Ausnehmung den erwünschten Zweck erfüllen könnte, die sich von der Vorderseite des Kupplungsmaulträgers 1 ausgehend über einen Teil von dessen Tiefe erstreckt. Der Handgriff 9 wurde bislang als starr an der Oberseite des Kupplungsmaulträgers 1 befestigt angenommen. Er könnte auch schwenkbar ausgebildet werden und, solange er nicht benötigt wird, in eine Lage verschwenkt werden, in der er nicht oder nur unwesentlich über die Oberkante des Kupplungsmaulträgers hinausragt.

Die Länge des Durchbruchs 10 ist beim beschriebenen Ausführungsbeispiel etwa um die Länge der zusammengedrückten Feder 13 größer als der Verstellhub der Riegel 7, damit die Feder 13 innerhalb des Durchbruchs 10 Platz hat und einfach montiert werden kann. Wie aus Fig. 3 erkennbar, stützt sich ihr dem Hebel 8 abgewandtes Ende am Boden des Durchbruchs 10 ab.

Es bedarf keiner besonderen Erwähnung, daß eine mit dem Kupplungsmaulträger 1 einstückig ausgebildete Rastplatte 11 gleichermaßen den angestrebten Zweck erfüllen kann, wie die beschriebene, gesondert am Kupplungsmaulträger befestigte Rastplatte 11.

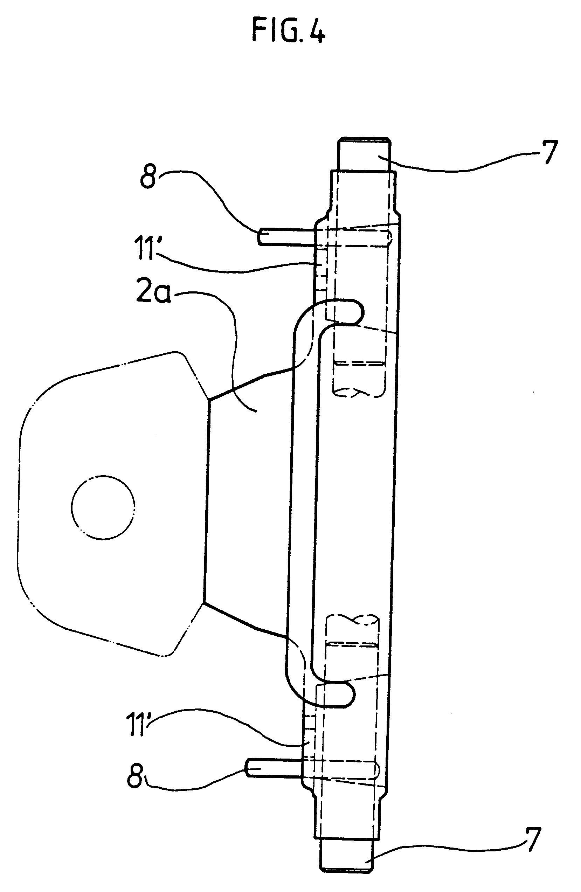

Letzteres kommt insbesondere bei einer in Fig. 4 dargestellten anderen Ausführungsform der Erfindung in Betracht, wo zur weiteren Einsparung von Gewicht und Kosten die den eigentlichen Kupplungsmaulträger 1 bildende Platte als ein Teil sowohl mit den Rastplatten 11′ als auch dem Befestigungslager 2a der Kupplung ausgebildet werden kann.

## Patentansprüche

1. Höhenverstellbare Anhängerkupplung, insbesondere für landwirtschaftliche Fahrzeuge, umfassend
einen Kupplungsmaulträger (1) zur Befestigung eines Kupplungsmauls (2), der in vertikalen, am Fahrzeug befestigten Führungsschienen geführt ist,
im Kupplungsmaulträger geführte Riegel (7), die in einer Verriegelungsstellung in Ausnehmungen der Führungsschienen eingreifen und den Kupplungsmaulträger (1) in den Führungsschienen gegen eine Höhenverstellung verriegeln und die aus der Verriegelungsstellung in eine Entriegelungsstellung zurückziehbar sind, in der der Kupplungsmaulträger (1) längs den Führungsschienen verschiebbar ist,
eine Federanordnung (13) zum Vorspannen der Riegel in die Verriegelungsstellung, und
eine Einrichtung zur Verstellung der Riegel zwischen der Verriegelungsstellung und der Entriegelungsstellung,
dadurch **gekennzeichnet,**
daß im Bereich jeder der Riegel (7) im Kupplungsmaulträger (1) ein Durchbruch (10) ausgebildet ist, und
daß an jedem Riegel (7) eine durch den jeweiligen Durchbruch (10) herausragende und in der Entriegelungsstellung des jeweiligen Riegels (7) arretierbare Handhabe (8) befestigt ist.

2. Anhängerkupplung nach Anspruch 1, dadurch **gekennzeichnet,** daß die Handhabe (8) ein in dem Riegel verankerter Stift ist.

3. Anhängerkupplung nach einem der Ansprüche 1 oder 2, dadurch **gekennzeichnet,** daß in den Durchbruch (10) ein Anschlag (11) hineinreicht, und daß der Riegel (7) um seine Achse verschwenkbar ist, derart, daß die Handhabe (8) zur formschlüssigen Arretierung in Eingriff mit dem Anschlag (11) verschwenkbar ist.

4. Anhängerkupplung nach einem der vorhergehenden Ansprüche, dadurch **gekennzeichnet,** daß die Federanordnung (13) für jeden Riegel (7) eine sich einerseits am Kupplungsmaulträger (1) und andererseits an der Handhabe (8) abstützende Drehdruckfeder umfaßt, durch die der Riegel in eine der Arretierung entsprechende Winkelstellung vorgespannt wird.

## Claims

1. A trailer coupling which is adjustable in respect of height, in particular for agricultural vehicles, comprising
a coupling jaw carrier (1) for fixing a coupling jaw (2), which carrier is guided in vertical guide rails fixed to the vehicle,
locking bolts (7) which are guided in the coupling jaw carrier and which in a locking position engage into openings in the guide rails and lock the coupling jaw carrier (1) in the guide rails to prevent displacement in respect of height and which can be retracted from the locking position into an unlocking position in which the coupling jaw carrier (1) is displaceable along the guide rails,
a spring arrangement (13) for biasing the locking bolts into the locking position, and
a means for displacing the locking bolts between the locking position and the unlocking position,
characterised in that
an aperture (10) is provided in the region of each of the locking bolts (7) in the coupling jaw carrier (1) , and
fixed to each locking bolt (7) is a handle (8) which protrudes through the respective aperture (10) and which can be arrested in the unlocking position of the respective locking bolt (7).

2. A trailer coupling according to claim 1 characterised in that the handle (8) is a pin which is anchored in the locking bolt.

3. A trailer coupling according to one of claims 1 and 2 characterised in that a stop (11) extends into the aperture (10) and that the locking bolt (7) is pivotable about its axis in such a way that the handle (8) is pivotable into engagement with the stop (11) for positive arresting purposes.

4. A trailer coupling according to one of the preceding claims characterised in that the spring arrangement (13) for each locking bolt (7) includes a torsion compression spring rich bears against the coupling jaw carrier (1) on the one hand and against the handle (8) on the other hand and by rich the locking bolt is biased into an angular position corresponding to the arresting condition.

## Revendications

1. Dispositif d'attelage réglable en hauteur, pour des véhicules agricoles notamment, comportant
un support (1) de mâchoire d'attelage pour la fixation d'une mâchoire (2) d'attelage, qui est guidée dans des rails verticaux fixés au véhicule,
des verrous (7) guidés dans le support de mâchoire d'attelage, qui, en position de verrouillage, viennent en prise dans des évidements des rails de guidage et verrouillent le support (1) de mâchoire d'attelage contre un déplacement en hauteur et qui sont rétractables de la position de verrouillage à une position de déverrouillage, dans laquelle le support (1) de mâchoire d'attelage peut coulisser le long des rails de guidage,
un dispositif à ressort (13) pour la précontrainte du verrou en position de verrouillage et
un mécanisme pour le déplacement des verrous entre les positions de verrouillage et de déverrouillage,
**caractérisé en ce que**
dans le secteur de chacun des verrous (7), un ajour (10) est réalisé dans le support (1) de mâchoire d'attelage et
en ce que sur chacun des verrous (7) est fixé un levier de manoeuvre (8) faisant saillie à travers l'ajour (10) respectif et capable d'être arrêté en position de déverrouillage de chaque verrou (7).

2. Dispositif d'attelage selon la revendication 1, **caractérisé en ce que** le levier de manoeuvre (8) est une broche ancrée dans le verrou.

3. Dispositif d'attelage selon l'une des revendications 1 ou 2, **caractérisé en ce qu'**une butée (11) s'étend à l'intérieur de l'ajour (10) et en ce que le verrou (7) peut pivoter autour de son axe, de manière que le levier de manoeuvre (8) puisse pivoter en position d'arrêt à fermeture géométrique en prise avec la butée (11).

4. Dispositif d'attelage selon l'une des revendications précédentes, **caractérisé en ce que** le dispositif à ressort (13) de chacun des verrous (7) comporte un ressort à torsion-pression prenant appui d'une part sur le support (1) de mâchoire d'attelage et d'autre part sur le levier de manoeuvre (8) ressort au moyen duquel le verrou est précontraint dans une position angulaire correspondant à celle de l'arrêt.
